# EUROPEAN PATENT APPLICATION

(11) **EP 4 553 733 A1**
(43) Date of publication of application: **14.05.2025**
(21) Application number: 23208541.5
(22) Date of filing: 08.11.2023
(51) Int. Cl.: G06Q 20/04, G07F 17/32

(54) **INVOLVEMENT OF AN ELECTRONIC LOTTERY SYSTEM ALLOWING THE PLAYER TO SELECT COMBINATIONS OF DEFINED BETS**

(71) Applicant: Borko, Miroslav, 971 01 Prievidza (SK)
(72) Inventor: Borko, Miroslav, 971 01 Prievidza (SK)
(74) Representative: Belicka, Ivan

(57) **Abstract**

The involvement of an electronic system for lotteries allowing the player to choose combinations of defined bets, comprising a pick unit (10) and a draw unit (20), wherein the pick unit (10) comprises a player account (11), a registration application (12), an electronic ticket (13), a checking application (14), and a cancellation application (15), wherein the draw unit (20) comprises a database (21) of numbers, a draw application (22), an evaluation application (23), a modifying application (24), a database (25) of picked numbers, a timing application (26), and a division application (27), wherein the electronic ticket (13) is connected via bidirectional nodes to the registration application (12) and to the cancellation application (15) and via output node to the database (25) of picked numbers, and further the electronic ticket (13) is connected via input nodes to the checking application (14), to the player account (11) to the modifying application (24) and the timing application (26), then the checking application (14) is connected via output node to the registration application (12) and this is connected via output node to the timing application (26), then the database (25) of picked numbers is connected via output node to the division application (27) and this is connected via output node to the player account (11), further the database (25) of picked numbers is connected via bidirectional nodes to the evaluation application (23), then the draw application (22) is connected via bidirectional nodes to the numbers database (21) and via output nodes to the timing application (26), the evaluation application (23) and the modifying application (24), wherein the editing application (24) is connected via output node to the numbers database (21), wherein the electronic ticket (13) consists of a single field containing at least 36 numbers and is divided into rows (30) and/or columns (31) that can be combined into systems and combinations thereof.

## Description

### Technical field

The invention relates to the involvement of an electronic lottery system allowing a player to select combinations of defined bets.

### Background

Gambling has become very popular all over the world, especially in recent times. The US and several European countries have been running lotteries for many years. Traditional lotteries usually provide one option for gambling based on the occurrence of a combination of several numbers or symbols. The lotto game, which provides various possibilities for gambling, can significantly increase state revenues and provide people with additional chances to win. It can also provide more fun for people and increase their interest in playing the game. Bets can be placed in the online system at numerical lottery collection points, such as betting shops, newsagents, post offices, equipped with a terminal that is linked via online system (in real time) with the central system, or via the Internet or SMS. Bets are placed using tickets issued for the numerical lottery or by random pick method by ticking a given number of numbers from a predetermined set of numbers.

US 2007/0082721, US 2006/0073864, US 6,079,713 and US 5,100,139 describe gaming methods that can be used for lotto games. However, all of these methods also use "classic" cards and are not generalized to playing using other games such as chess, checkers (Fig. 15), mah jong, and dominoes (Fig. 28). CA 02790780 2012-08-06 WO 2010/089733 PCT/IL2009/001106 -2- US 1,463,871 describes a game that is played according to the following rules: cards are drawn randomly from the deck, creating a random sequence of suits. During a lotto game, 19 random sequences are created: four sequences of cards of the same suit, 13 sequences of cards of the same rank, a sequence of suits, and a sequence of card ranks, which are created as derivatives of the above sequences. Random sequences of cards of the same suit and cards of the same rank provide many options for bets based on a selection of combinations of cards of different suits and cards of different ranks, such as the first card of each suit, the first card of each rank, and more.

Another solution is the Slovak Utility Model No. 4358, which describes an electronic system at a gaming operator (hereinafter referred to as the operator) for real-time betting, comprising a service application, a subscriber's communication mobile device and communication channels, based on the fact that the communication mobile device is connected via relevant gaming channel to the registration and payment portal of the service application, wherein the registration payment portal is further connected to the gaming server, to the database unit and to the transaction unit.

### Summary

The above mentioned problems and shortcomings of the current pick system solutions operated via mobile networks or on-line terminals are eliminated by the presented solution. The essence of the solution lies in the creation of involvement of an electronic lottery system allowing the player to choose combinations of defined bets, which has a completely new structure of control applications. The whole system contains a draw unit and a pick unit that are interconnected and one without the other is not functional, wherein they contain a registration application and a pick application, where the values constituting said game are selected randomly from a list or are selected from a fixed sequence of numbers so as to produce random sequences of said values, and where the player himself defines fewer or more complex combinations of values for betting according to the amount of the bet and the odds of winning.

In this method, values are grouped in sets or in sequences, rows or columns composed of at least 2 values and at least one value type and combinations thereof. Each set consists of a set of value types included in all sets in the game.

The operational server contains a control application ensuring the operation of the registration and evaluation application, as well as a draw application in the case of electronic draws, the communication channels represent an Internet terminal, a mobile phone with Internet connection, SMS or other device ensuring the transmission of information to the registration unit.

The registration unit contains the game registration application, game account, electronic ticket. The player fills out the electronic ticket. The checking application then records the submitted ticket and assigns it a specific IDg for the game, which is linked to the player's IDp. The evaluation application creates a win table and allocates wins to player accounts according to the guessed numbers and combinations marked on the ticket (rows, columns, combination fields).

### Brief description of the drawings

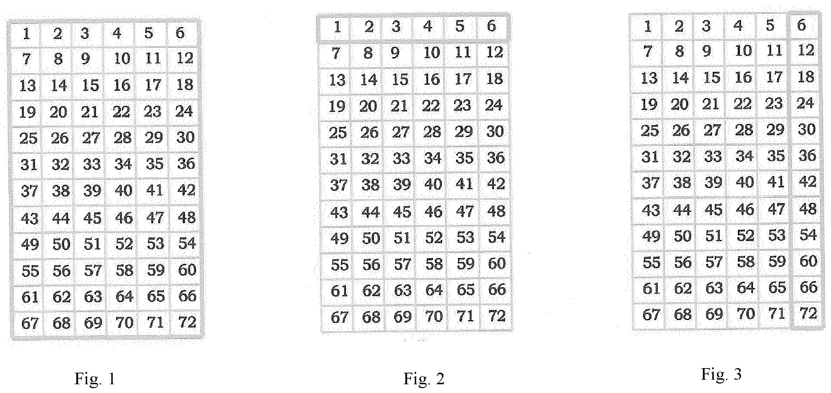

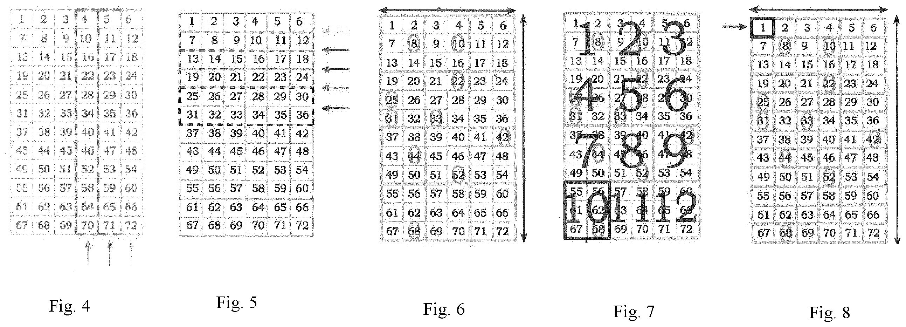

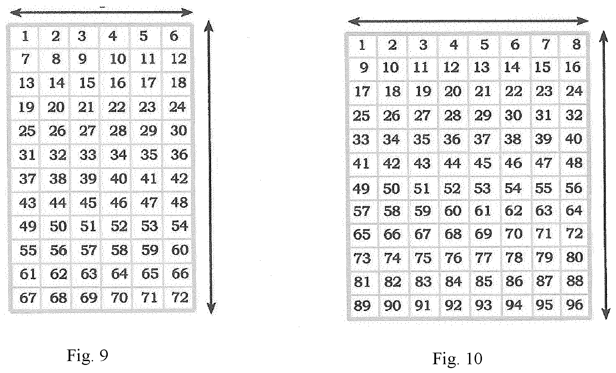

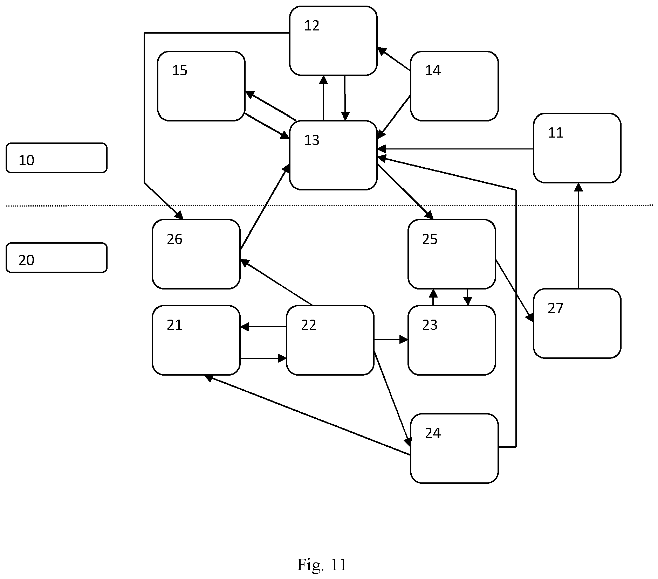

The accompanying Figs. 1-3 show a simple electronic ticket and the division into rows and columns, Figs. 4-8 show the division of the ticket into fields in various combinations, and Figs. 9 and 10 show a representation of the ticket in various sizes, Fig. 11 shows a block diagram of the system for creating and linking applications

### Examples of embodiments

An electronic real-time system influencing, adapting and modifying the course of lottery games, comprising a pick unit 10 and a draw unit 20, wherein the pick unit 10 comprises a player account 11, a registration application 12, an electronic ticket 13, a checking application 14, and a cancellation application 15, wherein the draw unit 20 comprises a database 21 of numbers, a draw application 22, an evaluation application 23, a modifying application 24, a database 25 of picked numbers, a timing application 26, and a division application 27, wherein the electronic ticket 13 is connected via bidirectional nodes to the registration application 12 and to the cancellation application 15 and via output node to the database 25 of picked numbers, and further the electronic ticket 13 is connected via input nodes to the checking application 14, to the player account 11 to the modifying application 24 and the timing application 26, then the checking application 14 is connected via output node to the registration application 12 and this is connected via output node to the timing application 26, then the database 25 of picked numbers is connected via output node to the division application 27 and this is connected via output node to the player account 11, further the database 25 of picked numbers is connected via bidirectional nodes to the evaluation application 23, then the draw application 22 is connected via bidirectional nodes to the numbers database 21 and via output nodes to the timing application 26, the evaluation application 23 and the modifying application 24, wherein the editing application 24 is connected via output node to the numbers database 21.

The player registers with the registration application 12 in the system registry and is assigned a player account 11 , which is part of the pick unit 10 together with applications 12, 13 , 14 , 15 and a specific player I.D. number. In order to register for the game, the player must fill in the electronic ticket 13 according to the game plan and will then be assigned an I.Dg. game identification number to the player's specific I.Dp. number. There is a time limit to register for the game, which is supervised by the time application 26. Registering for the game means filling in one or more electronic tickets 13 and paying a fee corresponding to the amount of values picked in each ticket.

The electronic ticket 13 consists of a single field of at least 36 numbers divided into rows 30 and/or columns 31.

The electronic ticket 13 can be divided into a maximum of 12 lines and the lines can be combined into a:
base-6 system (1-6, 7-12, 13-18, 19-24, 25-30, 31-36, 37-42, 43-48, 49-54, 55-60, 61-66, 67-72)
base-12 system (1-12, 13-24, 25-36, 37-48, 49-60, 61-72)
base-18 system (1-18, 19-36, 37-54, 55-72)
base-24 system (1-24, 25-48, 49-72)
base-36 system (1-36, 37-72)

The electronic ticket can be divided into a minimum of 4 columns of 12 numbers each and the columns can be combined into a:
base-12 system (values listed in one separate column)
base-24 system (values listed in two contiguous columns)
base-36 system (values listed in three contiguous columns)

The electronic ticket 13 can be divided into fields - representing a combination of rows and columns, when fields are created by marking the size of the division in the row and column direction. The ticket can be divided into fields of one number depending on the size of the ticket or into fields containing the following according to the type of system:
base-2 system (2x1)
base-2 system (1x2)
base-3 system (3x1)
base-3 system (1x3)
base-4 system (2x2)
base-4 system (1x4)
base-6 system (3x2)
base-6 system (2x3)
base-6 system (1x6)
base-8 system (2x4)
base-8 system (4x2)
base-9 system (3x3)
base-12 system (1x12)
base-12 system (3x4)
base-12 system (2x6)
base-12 system (6x2)
base-12 system (4x3)
base-16 system (4x4)
base-16 system (8x2)
base-18 system (3x6)
base-24 system (4x6)
base-24 system (12x2)
base-24 system (8x3)
base-32 system (8x4)
base-36 system (6x6)
base-36 system (12x3)
base-48 system (8x6)
base-48 system (4x12)
base-72 system (72x1)
base-72 system (12x6)

In the next embodiment, the basic size (6x12) of ticket 13 can be adjusted.

E.g., to the size (4x10), (4x12), (4x14), (4x16), (4x18), (4x20), (6x6), (6x8), (6x10), (6x14), (6x16), (6x18), (8x6), (8x8), (8x10), (8x12), (8x14), (10×10), (10×12),
wherein the number of fields and the number of combinations and the division of the electronic ticket 13 change too.

In another embodiment, the individual fields can have a different shape than rectangle and square, for example, triangle, trapezoid, n-gon, circle.

### Industrial applicability

The proposed system can be implemented in all existing lottery games or to create a new category of numerical lottery and will be connected to a central computerised control system.

## Claims

1. Involvement of an electronic lottery system allowing the player to select combinations of defined bets, comprising a pick unit (10) and a draw unit (20), wherein the pick unit (10) comprises a player account (11), a registration application (12), an electronic ticket (13), a checking application (14), and a cancellation application (15), wherein the draw unit (20) comprises a database (21) of numbers, a draw application (22), an evaluation application (23), a modifying application (24), a database (25) of picked numbers, a timing application (26), and a division application (27), wherein the electronic ticket (13) is connected via bidirectional nodes to the registration application (12) and to the cancellation application (15) and via output node to the database (25) of picked numbers, and further the electronic ticket (13) is connected via input nodes to the checking application (14), to the player account (11) to the modifying application (24) and the timing application (26), then the checking application (14) is connected via output node to the registration application (12) and this is connected via output node to the timing application (26), then the database (25) of picked numbers is connected via output node to the division application (27) and this is connected via output node to the player account (11), further the database (25) of picked numbers is connected via bidirectional nodes to the evaluation application (23), then the draw application (22) is connected via bidirectional nodes to the numbers database (21) and via output nodes to the timing application (26), the evaluation application (23) and the modifying application (24), wherein the editing application (24) is connected via output node to the numbers database (21), **characterized in that** the electronic ticket (13) consists of a single field of at least 36 numbers, divided into rows (30) and/or columns (31), where the rows (30) can be combined into:
base-6 system (1-6, 7-12, 13-18, 19-24, 25-30, 31-36, 37-42, 43-48, 49-54, 55-60, 61-66, 67-72)
base-12 system (1-12, 13-24, 25-36, 37-48, 49-60, 61-72)
base-18 system (1-18, 19-36, 37-54, 55-72)
base-24 system (1-24, 25-48, 49-72)
base-36 system (1-36, 37-42)
and the columns (31) can be combined into:
base-12 system (values listed in one separate column)
base-24 system (values listed in two contiguous columns)
base-36 system (values listed in three contiguous columns)
wherein the electronic ticket (13) is divided by a combination of rows and columns into fields (32) according to the system: base-1 system (1x1), base-2 system (2x1), base-2 system (1x2), base-3 system (3x1), base-3 system (1x3), base-4 system (2x2), base-4 system (1x4), base-6 system (3x2), base-6 system (2x3), base-6 system (1x6), base-8 system (2x4), base-8 system (4x2), base-9 system (3x3), base-12 system (1x12), base-12 system (3x4), base-12 system (2x6), base-12 system (6x2), base-12 system (4x3), base-16 system (4x4), base-16 system (8x2), base-18 system (3x6), base-24 system (4x6), base-24 system (12x2), base-24 system (8x3), base-32 system (8x4), base-36 system (6x6), base-36 system (12x3), base-48 system (8x6), base-48 system (4x12), base-72 system (72x1), base-72 system (12x6).

2. The involvement of an electronic lottery system allowing a player to select combinations of defined bets, **characterized in that** the electronic ticket (13) has a size of (4x10), (4x12), (4x14), (4x16), (4x18), (4x20), (6x6), (6x8), (6x10), (6x14), (6x16), (6x18), (8x6), (8x8), (8x10), (8x12), (8x14), (10x10), (10x12), (12x10).

3. The involvement an electronic lottery system allowing a player to select combinations of defined bets, **characterized in that** the selected fields (32) have the shape of a square, a rectangle, a triangle, a trapezoid, an n-gon, a circle.
